# EUROPEAN PATENT APPLICATION

(11) **EP 4 851 421 A1**
(43) Date of publication of application: **09.12.2026**
(21) Application number: 25181129.5
(22) Date of filing: 05.06.2025
(51) Int. Cl.: E21B 7/02, E21C 37/00

(54) **UNDERGROUND MINING MACHINE**

(71) Applicant: SANDVIK MINING AND CONSTRUCTION OY, 33330 Tampere (FI)
(72) Inventor: Francke, Totte, 33311 Tampere (FI); Lehtinen, Ville, 33311 Tampere (FI); Pesola, Mikko, 33311 Tampere (FI); Pärssinen, Ville, 33311 Tampere (FI)
(74) Representative: Sandvik

(57) **Abstract**

An underground mining machine (1) comprises a movable carrier (2), an imaging device (8) for imaging an operating environment of the machine, and a control system (10) for controlling an operation of the machine. The control system is configured to access a database (30) comprising a first location information (1LOI-42) of a previously drilled hole (42) at a drill site (40) in the operating environment of the machine. The control system is further configured to determine a second location information (2LOI-42) of the previously drilled hole at the drill site with respect to the machine entering the same drill site, and determine position information (POI1-42) of the machine having entered the drill site relative to the previously drilled hole based on the first and the second location information of the previously drilled hole.

Also, a method for determining position information of the machine and a computer program that implements the method.

## Description

### TECHNICAL FIELD

The present application relates to an underground mining machine comprising a movable carrier. The present application relates also to a method for determining position information of the underground mining machine and a computer program that implement the method. Generally, the present application relates to a navigation of the underground mining machine in an operating environment of the underground mining machine.

### BACKGROUND

An accurate navigation of an underground mining machine in an operating environment of the underground mining machine is an essential part for efficient underground mining. An accuracy of the navigation depends on many factors. The most significant of these factors are used navigation method, how meticulously the navigation is done, and how accurately navigation points applied in the underground mining machine or in an operating environment of the underground mining machine are in place.

Requirements for high navigation accuracy are emphasized for example in operational situations, where the underground mining machine leaves its work site, and the work will be continued later either with the same underground mining machine or with some other underground mining machine. If correct navigation of the underground mining machine continuing the work fails, the work intended to be carried out at the work site will not be carried out as originally planned.

### SUMMARY

The present application provides an example of a novel underground mining machine, an example of a novel method for determining position information of an underground mining machine, and an example of a novel computer program that implement the method.

An underground mining machine comprises a movable carrier, at least one imaging device for imaging an operating environment of the underground mining machine, and a control system for controlling an operation of the underground mining machine, wherein the control system is configured to
access at least one database, wherein the at least one database comprises a first location information of at least one previously drilled hole at a drill site in the operating environment of the underground mining machine,
determine a second location information of the at least one previously drilled hole at the drill site with respect to the underground mining machine entering the same drill site, and
determine position information of the underground mining machine having entered the drill site relative to the at least one previously drilled hole based on the first location information of the at least one previously drilled hole and based on the second location information of the at least one previously drilled hole.

The method for determining position information of the underground mining machine comprises
accessing, by means of the control system, at least one database, wherein the at least one database comprises a first location information of at least one previously drilled hole at a drill site in the operating environment of the underground mining machine,
determining, by means of the control system, a second location information of the at least one previously drilled hole at the drill site with respect to the underground mining machine entering the same drill site, and
determining, by means of the control system, position information of the underground mining machine having entered the drill site relative to the at least one previously drilled hole based on the first location information of the at least one previously drilled hole and based on the second location information of the at least one previously drilled hole.

The computer program comprises instructions for causing the control system of the underground mining machine to perform at least the following:
accessing at least one database, wherein the at least one database comprises a first location information of at least one previously drilled hole at a drill site in the operating environment of the underground mining machine,
determining a second location information of the at least one previously drilled hole at the drill site with respect to the underground mining machine entering the same drill site, and
determining position information of the underground mining machine having entered the drill site relative to the at least one previously drilled hole based on the first location information of the at least one previously drilled hole and based on the second location information of the at least one previously drilled hole.

A non-transitory, computer-readable medium having stored thereon program instructions that, when executed by one or more processors of a computing system, cause the control system of the underground mining machine to perform at least the following operations:
accessing at least one database, wherein the at least one database comprises a first location information of at least one previously drilled hole at a drill site in the operating environment of the underground mining machine,
determining a second location information of the at least one previously drilled hole at the drill site with respect to the underground mining machine entering the same drill site, and
determining position information of the underground mining machine having entered the drill site relative to the at least one previously drilled hole based on the first location information of the at least one previously drilled hole and based on the second location information of the at least one previously drilled hole.

The present application is based on the idea of determining a position information of an underground mining machine entering a drill site relative to at least one previously drilled hole at the drill site based on location information of the at least one previously drilled hole at the drill site.

An advantage of the solution of the present application is that based on the location information of the at least one previously drilled hole at the drill site the position information of the underground mining machine that has entered the drill site can be determined in relation to the at least one previously drilled hole. In response to that the control system of the underground mining machine that has entered to the drill site recognizes the at least one previously drilled hole relative to the underground mining machine at the same location at the drill site as did the control system of the underground mining machine that drilled the at least one previously drilled hole. This improves the accuracy of the work that continues at the drill site.

### BRIEF DESCRIPTION OF THE DRAWINGS

In the following the present application will be described in greater detail by means of example embodiments with reference to the accompanying drawings, in which
Figure 1 shows schematically a side view of an example of an underground mining machine;
Figure 2 shows schematically an example of a control system of the underground mining machine for controlling operation of an underground mining machine;
Figure 3 shows schematically a side view of an example of an operating environment of an underground mining machine;
Figure 4 shows schematically some operations implemented by an underground mining machine, a method and a computer program disclosed;
Figure 5 shows schematically another side view of an example of an operating environment of an underground mining machine;
Figure 6 shows schematically an example of using the control system of the underground mining machine to determine position information of the underground mining machine;
Figure 7 shows schematically a further example of a control system for controlling operation of an underground mining machine, and
Figure 8 shows schematically a further example of a control system for controlling operation of an underground mining machine.

For the sake of clarity, the figures show some example embodiments of the present application in a simplified manner. Like reference numerals identify like elements in the figures.

### DETAILED DESCRIPTION

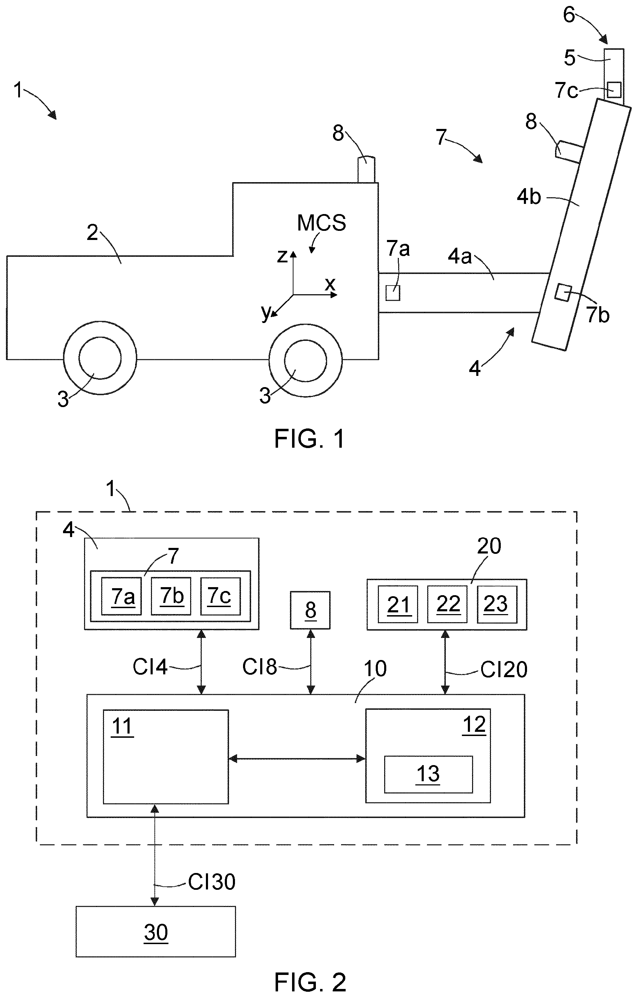

Figure 1 shows schematically a side view of an example of an underground mining machine 1. The underground mining machine 1 comprises a carrier 2. The carrier 2 constitutes at least part of the frame structure of the underground mining machine 1. The carrier 2 is provided with moving means so that the carrier 2 is a movable carrier 2, enabling the underground mining machine 1 to move in an operating environment of the underground mining machine 1. In the example of Figure 1, said moving means are wheels 3. Generally said moving means 3 can comprise wheels, a track system, a combination of the wheels and the track system, or some other means known as such to provide the movement of the underground mining machine 1 in relation to the operating environment of the underground mining machine 1.

The underground mining machine 1 further comprises a boom 4. Instead of only one boom 4, the underground mining machine 1 may comprise two or more booms 4. In the example of Figure 1, the boom 4 comprises a first boom part 4a and a second boom part 4b. The first boom part 4a is attached at its proximal end to the carrier 2 in an articulate manner. The second boom part 4b is attached at its proximal end to a distal end of the first boom part 4a in an articulate manner. At a distal end of the second boom part 4b there is a tool 5 of the underground mining machine 1. In the example of Figure 1, the tool 5 is attached to the distal end of the second boom part 4b in an articulate manner. Alternatively, the tool 5 can be fixed to the boom 4. For the sake of clarity, joints known per se and allowing the first boom part 4a, the second boom part 4b and the tool 5 to turn relative to the movable carrier 2 or relative to each other are not disclosed in Figure 1. The implementation of the boom 4 may, however, deviate from that disclosed above. A distal end of the tool 5 is denoted with reference number 6.

The underground mining machine 1 further comprises a sensing arrangement configured to provide information describing position information of the boom 4 relative to the movable carrier 2. The position information of the boom 4 relative to the movable carrier 2 comprises position of any part of the boom 4 relative to the movable carrier 2 and orientation of any part of the boom 4 relative to the movable carrier 2. The position information of the boom 4 relative to the movable carrier 2 may also comprise position information of the tool 5 relative to the movable carrier 2. In that case the position information of the boom 4 relative to the movable carrier 2 comprises also position of the tool 5 relative to the movable carrier 2 and orientation of the tool 5 relative to the movable carrier 2.

According to an example of the sensing arrangement, the sensing arrangement comprises a sensor system 7 which comprises a necessary number of sensors arranged at least at the boom 4, but also at the tool 5 in case of the position information of the tool 5 relative to the movable carrier 2 is considered expedient. Only as one schematic example of the sensor system 7, Figure 1 discloses a first sensor 7a attached at the first boom part 4a, a second sensor 7b attached at the second boom part 4b and a third sensor 7c attached at the tool 5. The sensor system 7 may also include one or more sensors attached to the movable carrier 2 of the underground mining machine 1. The sensors 7a, 7b, 7c may for example be angle sensors or other applicable sensors known as such for a person skilled in the art.

The underground mining machine 1 further comprises at least one imaging device for imaging an operating environment of the underground mining machine 1. The at least one imaging device is arranged in the underground mining machine 1 at a determined position in the underground mining machine 1. The imaging device may for example be based on camera- or laser scanning technology to image or scan the operating environment of the underground mining machine 1. The imaging device may for example comprise a lidar sensor, a camera, a stereo camera, a radar or a time-of-flight camera.

**In** the example of the underground mining machine 1 shown in Figure 1, the underground mining machine 1 comprises an imaging device 8 arranged in the carrier 2 of the underground mining machine 1 at a known position and orientation in a machine coordinate system MCS of the underground mining machine 1. Figure 1 shows schematically the machine coordinate system MCS in the underground mining machine 1. The machine coordinate system MCS of the underground mining machine comprises an origin at a specific point in the underground mining machine 1.

The at least one imaging device 8 arranged in the carrier 2 of the underground mining machine 1 can also be configured to provide a sensing arrangement which is configured to provide the information describing the position information of the boom 4 relative to the movable carrier 2. In that case a control system of the underground mining machine 1, which is discussed in more detail below, can be configured to determine the position information of the boom 4 relative to the movable carrier 2 based on the imaging data provided by the at least one imaging device 8 arranged in the carrier 2 of the underground mining machine 1. **In** that case the sensor system 7 configured to provide information describing position information of the boom 4 relative to the movable carrier 2 is not necessary.

**In** the example of the underground mining machine 1 also shown in Figure 1, the underground mining machine 1 comprises an imaging device 8 arranged in the boom 4 of the underground mining machine 1 at a known position and orientation in the boom 4. **In** that case the underground mining machine 8 comprises also the sensor system 7 to provide information describing position information of the boom 4 relative to the movable carrier 2 in the machine coordinate system MCS. When the imaging device 8 is arranged in the boom 4 of the underground mining machine 1 at the known position and orientation in the boom 4, the sensor system 7 is also configured to provide information describing position information of the imaging device 8 relative to the movable carrier 2 in the machine coordinate system MCS. In that case a control system 10 of the underground mining machine 1 is configured to determine position information of the imaging device 8 relative to the movable carrier 2 of the underground mining machine 1 based on the position information of the boom 4 relative to the movable carrier 2 and the determined position and orientation of the at least one imaging device 8 in the boom 4.

According to an alternative, the underground mining machine is an underground drilling rig. The tool of the underground drilling rig is a rock drilling machine that can be equipped with one or more drill rods and a drill bit at a distal end of the outermost drill rod.

According to another alternative, the underground mining machine is an underground bolting machine. The tool of the underground bolting machine is a bolting tool that is intended to insert reinforcement bolts into a rock in the operating environment of the underground bolting machine.

According to a further alternative, the underground mining machine is an underground charging machine. A tool of the underground charging machine is intended to insert charges into earlier drilled blastholes in the operating environment of the underground charging machine.

Figure 2 shows schematically a control system 10 for controlling operation of an underground mining machine 1. The control system 10 comprises at least one processor 11 and at least one memory 12 including a computer program code 13. The at least one memory 12 and the computer program code 13 are configured to, with the at least one processor 11, control the operations of the underground mining machine 1. The operations of the underground mining machine 1 to be controlled by the control system 10 may include at least one of the following: a driving of the underground mining machine 1, an operation of the boom 4 of the underground mining machine 1, or an operation of the tool 5 of the underground mining machine 1.

For the sake of clarity, Figure 2 discloses only one processor 11 and only one memory 12, although various data processing operations and operations for controlling the operation of the underground mining machine 1, as discussed in more detail below, may be divided to be implemented with more than one processor 11 and more than one memory 12.

Figure 2 discloses schematically, with the box depicted by the dotted line, the underground mining machine 1. Figure 2 also discloses schematically the boom 4 of the underground mining machine 1 and the sensor system 7 in the boom 4. Figure 2 also discloses schematically a communication interface CI4 through which the control system 10 is configured to control the operation of the boom 4 and/or to receive information collected by the sensor system 7, if the sensor system 7 is applied in the underground mining machine 1.

Figure 2 also discloses schematically the imaging device 8, and a communication interface CI8 through which the control system 10 is configured to receive imaging data collected by the imaging device 8 and/or to control the operation of the imaging device 8, if the imaging device 8 is applied in the underground mining machine 1.

The control system 10 can control operations of the underground mining machine 1 automatically as a response to an event taking place during the operation of the underground mining machine 1. Alternatively, or additionally, the control system 10 can control operations of the underground mining machine 1 as a response to control requests received from a user interface 20 of the underground mining machine 1.

The user interface 20 of the underground mining machine 1 is also shown schematically in Figure 2. The user interface 20 of the underground mining machine 1 may comprise at least one manually operable control device. The at least one manually operable control device may be used for implementing non-automatic control requests for controlling the operation of the underground mining machine 1The at least one manually operable control device may comprise one or more hand-operable control devices 21, such as e.g. a control lever. The at least one manually operable control device may comprise one or more foot-operable control devices 22, such as e.g. a pedal. The user interface 20 may be implemented in a machine cabin of the underground mining machine 1. Alternatively, or additionally, there may be a user interface 20 that is an external user interface to the underground mining machine 1 and connected to the control system 10 of the underground mining machine 1 via a remote connection. Regarding especially the external user interface, the same user interface may be applied to control more than only one underground mining machine.

In addition to the at least one manually operable control device, the user interface 20 may comprise at least one display unit 23 which is configured to display information to an operator of the underground mining machine 1. The information to be displayed in the display unit 23 may comprise information describing the operation of the underground mining machine 1. Alternatively, or additionally, the information to be displayed in the display unit 23 may comprise information received from outside the underground mining machine 1. If the display unit 23 is implemented with a touch-sensitive screen, at least some of the control requests can be performed via the touch-sensitive screen.

The user interface 20 is connected to the control system 10 of the underground mining machine 1 with a communication interface CI20. Through the communication interface CI20 the control system 10 is configured to receive the control requests performed via the user interface 20 and/or to send information to the at least one display unit 23 in the user interface 20.

Generally, the at least one processor 11 may comprise, for example, one or more of various processing devices, such as for example a co-processor, a microprocessor, a controller, a digital signal processor (DSP), a processing circuitry with or without accompanying DSP, or various other processing devices including integrated circuits, such as, for example, an application specific integrated circuit (ASIC), a field programmable gate array (FPGA), a microcontroller unit (MCU), A hardware accelerator, a special-purpose computer chip, or the like.

Generally, the at least one memory 12 may be configured to store, for example, computer program code 13 or the like, for example, operating system software and application software. The at least one memory 12 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

When the control system 10 is configured to implement some functionality of the underground mining machine 1, some component or components of the control system 10, such as for example the at least one processor 11 and/or the memory 12, may be configured to implement this functionality. Furthermore, when the at least one processor 11 is configured to implement some functionality, this functionality may be implemented using the computer program code 13 comprised, for example, in the memory 12.

The functionality described herein may be performed, at least in part, by one or more computer program product components such as software components. According to an example embodiment, the control system 10 comprises a processor 11 or processor circuitry, such as for example a microcontroller, configured by the computer program code when executed to execute the example embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), and Graphics Processing Units (GPUs).

The computer program code 13 for enabling implementations of example embodiments of the present application or a part of such computer program code 13 may be loaded into the control system 10 by the manufacturer of the underground mining machine, by an operator of the underground mining machine, or by means of the control system 10 itself based on a download program. Alternatively, the computer program 13 can be pushed to the control system 10 by an external device. The computer program code 13 or a part of such computer program code 13 may arrive at the control system 10 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disc (DVD) or a Blu-ray Disc.

Figure 2 discloses further a database 30. The database 30 may be external to the control system 10 of the underground mining machine 1, whereby the database 30 is stored into a memory external to the control system 10. Alternatively, the database 30 may be internal to the control system 10 of the underground mining machine 1, whereby the database 30 is stored into the memory 12 in the control system 10. Figure 2 discloses schematically also a communication interface CI30 through which the control system 10, especially the at least one processor 11 in the control system 10, is configured to receive information from the database 30. The control system 10, especially the at least one processor 11 in the control system 10, can also be configured to store information into the database, or update information already present in the database 30, through the communication interface CI30. The information content of the database 30 will be discussed in more detail below.

According to an example, there may be a database internal to the control system 10 and another database external to the control system 10. If there is any change in the information content of either database, the same change can be updated in the other database. The information content of the database will be discussed in more detail below.

Regarding to the present application, the information stored into the database 30 comprises at least location information of at least one drill hole that has already been drilled at a drill site in the operating environment of the underground mining machine. The location information of the at least one previously drilled hole comprises at least location of the at least one previously drilled hole at the drill site in the operating environment of the underground mining machine. Alternatively, the location information of the at least one previously drilled hole comprises both the location of the drill hole and orientation of the drill hole at the drill in the operating environment of the underground mining machine. The at least one previously drilled hole that has already been drilled at the drill site in the operating environment of the underground mining machine refers to a drill hole, that has been drilled already earlier by some other underground mining machine before the underground mining machine presented in this application enters to the same drill site in the operating environment of the underground mining machine to carry out work tasks at that same drill site.

The work tasks to be carried out at the same drill site may refer to continuation of drilling more holes at the drill site according to a drill plan made for the drill site. In this case the underground mining machine 1 entering to the drill site may be the same underground drilling rig that was used earlier to drill the holes that have already been drilled, or some other underground drilling rig. Alternatively, the underground mining machine 1 entering to the drill site may be an underground bolting machine intended to insert reinforcement bolts into the drill holes that have already been drilled at the drill site. Still alternatively, the underground mining machine 1 entering to the drill site may be an underground charging machine intended to insert charges into the drill holes that have already been drilled at the drill site.

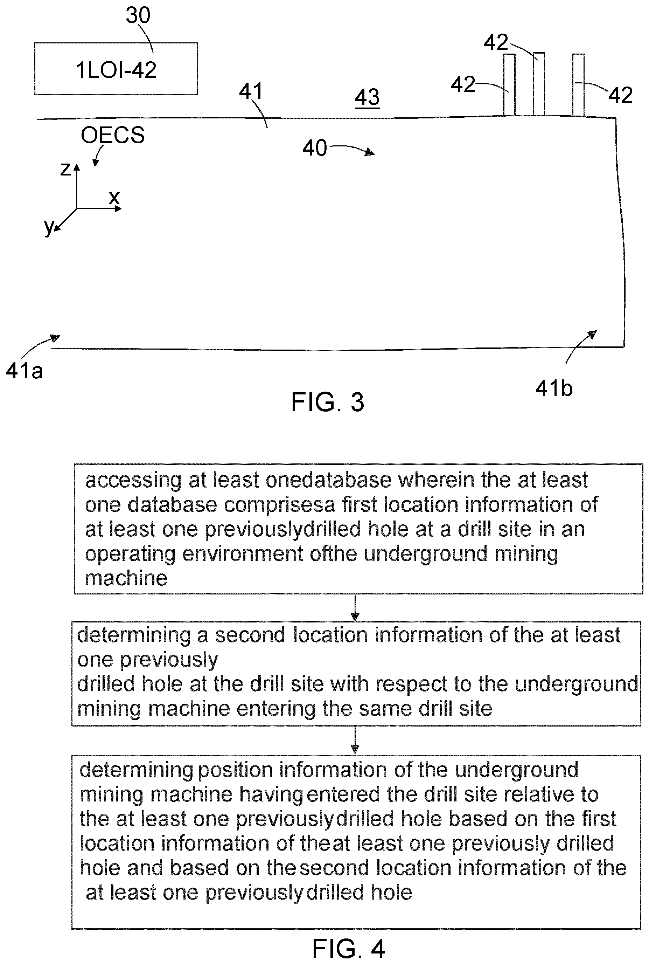

The location information of the at least one previously drilled hole is stored into the database 30 at least in an operating environment coordinate system of the underground mining machine. The operating environment coordinate system of the underground mining machine may for example be a mining site coordinate system. Figure 3, the content of which is discussed in more detail below, shows schematically the operating environment coordinate system OECS of the underground mining machine.

Figure 3 shows schematically a side view of an example of a drill site 40 in the operating environment of the underground mining machine 1, which underground mining machine 1 will enter the drill site 40. Figure 3 shows schematically a tunnel 41 in an underground mine. The tunnel 41 has an open first end 41a which provides an entry into the tunnel 41. The tunnel 41 has a closed second end 41b which is also called a face of the tunnel 41. The drill site 40 is at the second end 41b of the tunnel 41.

Figure 3 shows schematically drill holes 42 in a ceiling 43 of the tunnel 41. The drill holes 42 have been drilled at the drill site 40 by an unshown underground mining machine, which has thereafter left the drill site 40. The drill holes 42 are referred to in this description as previously drilled holes 42.

Figure 3 also shows schematically the database 30. The database 30 comprises a first location information 1LOI-42 of the at least one previously drilled hole 42. The first location information 1LOI-42 of the at least one previously drilled hole 42 comprises location information of the at least one previously drilled hole 42 at the drill site 40 in the operating environment coordinate system OECS. The first location information 1LOI-42 of the at least one previously drilled hole 42 has been determined by a control system of an underground mining machine having drilled the at least one previously drilled hole 42. The first location information 1LOI-42 of the at least one previously drilled hole 42 is thus determined at the time of drilling the at least one previously drilled hole 42. The first location information 1LOI-42 of the at least one previously drilled hole 42 comprises at least location of the at least one previously drilled hole 42 in an operating environment coordinate system OECS. The first location information 1LOI-42 of the at least one previously drilled hole 42 may also comprise orientation of the at least one previously drilled hole 42 in the operating environment coordinate system OECS.

Regarding n underground mining machine, the underground mining machine comprises a movable carrier, at least one imaging device for imaging an operating environment of the underground mining machine, and a control system for controlling an operation of the underground mining machine, wherein the control system is configured to
access at least one database, wherein the at least one database comprises a first location information of at least one previously drilled hole at a drill site in the operating environment of the underground mining machine,
determine a second location information of the at least one previously drilled hole at the drill site with respect to the underground mining machine entering the same drill site, and
determine position information of the underground mining machine having entered the drill site relative to the at least one previously drilled hole based on the first location information of the at least one previously drilled hole and based on the second location information of the at least one previously drilled hole.

Regarding a method for determining position information of the underground mining machine, the method comprises
accessing, by means of the control system, at least one database, wherein the at least one database comprises a first location information of at least one previously drilled hole at a drill site in the operating environment of the underground mining machine,
determining, by means of the control system, a second location information of the at least one previously drilled hole at the drill site with respect to the underground mining machine entering the same drill site, and
determining, by means of the control system, position information of the underground mining machine having entered the drill site relative to the at least one previously drilled hole based on the first location information of the at least one previously drilled hole and based on the second location information of the at least one previously drilled hole.

Regarding a computer program, the computer program comprises instructions for causing the control system of the underground mining machine to perform at least the following:
accessing at least one database, wherein the at least one database comprises a first location information of at least one previously drilled hole at a drill site in the operating environment of the underground mining machine,
determining a second location information of the at least one previously drilled hole at the drill site with respect to the underground mining machine entering the same drill site, and
determining position information of the underground mining machine having entered the drill site relative to the at least one previously drilled hole based on the first location information of the at least one previously drilled hole and based on the second location information of the at least one previously drilled hole.

Figure 4 shows schematically the operations implemented by the underground mining machine, the method and the computer program as disclosed above, especially as stated in the method.

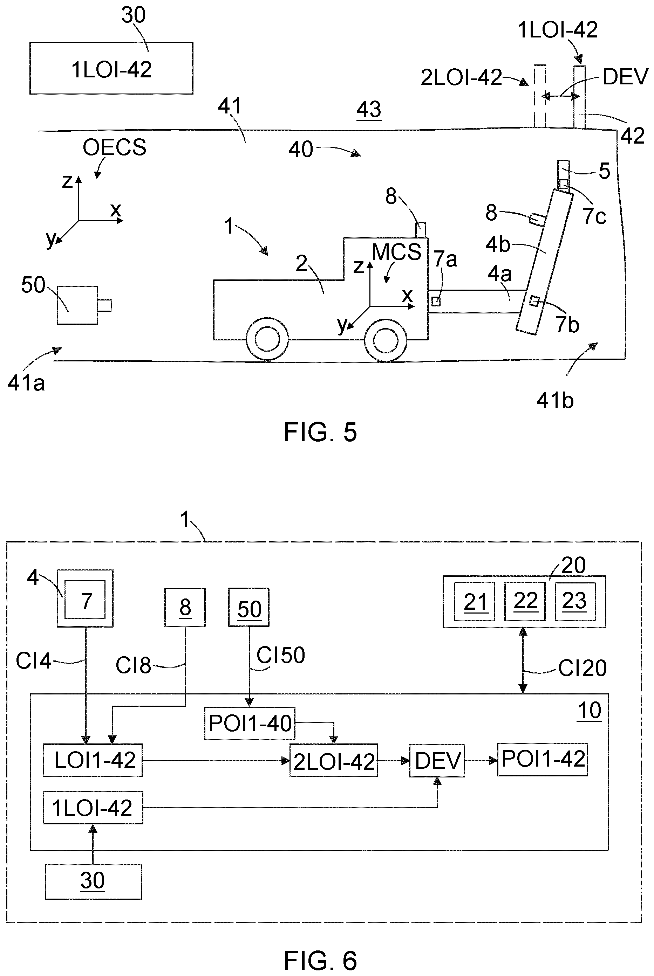

Figure 5 shows schematically a side view of the drill site 40 of Figure 3 with the underground mining machine 1 entering the drill site 40. For the sake of clarity, only one previously drilled hole 42 is shown Figure 5. However, the example is correspondingly applicable for drill sites 40 with more previously drilled holes 42.

The underground mining machine 1 enters the drill site 40 to carry out work tasks still intended to be carried out at the drill site 40. The work tasks still intended to be carried out at the drill site 40 may refer to the drilling of more drill holes 42 in the ceiling 43 of the tunnel 41, or to the drilling of drill holes to the face of the tunnel 41. Alternatively, the work tasks still intended to be carried out at the drill site 40 may refer to inserting reinforcement bolts into the previously drilled holes 42, or to inserting charges into the previously drilled holes 42.

Figure 5 also shows schematically a navigation device 50 external to the underground mining machine 1 at the drill site 40. The navigation device 50 is configured to provide navigation data based on which the control system 10 of the underground mining machine 1 is configured to determine position information POI1-42 of the underground mining machine 1 having entered the drill site 40 in the operating environment coordinate system OECS, as discussed in more detail below especially in view of Figure 6.

Referring to the example of Figures 4 and 5, the drill site 40 comprises the previously drilled hole 42, as shown with a solid line. A first location information of the previously drilled hole 42, denoted with the reference sign 1LOI-42, has been determined in the operating environment coordinate system OECS by a control system of the underground mining machine that has drilled the previously drilled hole 42. The first location information 1LOI-42 of the previously drilled hole 42 has been stored in the database 30 at the time of drilling the previously drilled hole 42. The first location information 1LOI-42 of the previously drilled hole 42 thus specifies the location information of the previously drilled hole 42 in the operating environment coordinate system OECS of the underground mining machine 1 according to the present invention.

In response to the underground mining machine 1 according to the present invention entering the drill site 40, the control system 10 of the underground mining machine 1 is configured to determine the position information of the underground mining machine 1 relative to the previously drilled hole 42. For implementing that, the control system 10 of the underground mining machine 1 having entered the drill site 40 is configured to determine a second location information 2LOI-42 of the previously drilled hole 42 in the operating environment coordinate system OECS with respect to the underground mining machine 1 entering the same drill site 40. However, because of differences in position and orientation, physical characteristics and operations between the underground mining machine having drilled the previously drilled hole 42 and the underground mining machine 1 according to the present invention having entered the drill site 40, the second location information 2LOI-42 of the previously drilled hole 42 will very probably express the previously drilled hole 42 to be at a different location than the location expressed by the first location information 1LOI-42. In other words, the actual location of the previously drilled hole 42 at the drill site 40 is naturally unchanged but the underground mining machine 1 having entered the drill site 40 interprets the previously drilled hole 42 to be at a different location than the location according to the first location information 1LOI-42. Just an example of this seemingly different location of the previously drilled hole 42 is shown in Figure 5 with a broken line, together with the reference sign 2LOI-42 denoting the second location information determined by the control system 10 of the underground mining machine 1 having entered the drill site 40. The second location information 2LOI-42 of the previously drilled hole 42 thus specifies the location information of the previously drilled hole 42 at the drill site 40 with respect to the underground mining machine 1 having entered the drill site 40.

For the sake of clarity, the difference between the location of the previously drilled hole 42 according to the first location information 1LOI-42 and the location of the previously drilled hole 42 according to the second location information 2LOI-42 is highly exaggerated in Figure 1 if compared to a practical operating situation.

In response to the determination of the second location information 2LOI-42 of the previously drilled hole 42, the control system 10 of the underground mining machine 1 having entered the drill site 40 is configured to determine position information of the underground mining machine 1 having entered the drill site 40 relative to the previously drilled hole 42 based on the first location information 1LOI-42 of the previously drilled hole 42 and based on the second location information 2LOI-42 of the at least one previously drilled hole. For implementing that the control system 10 of the underground mining machine 1 having entered the drill site 40 is configured to determine deviation DEV between the first location information 1LOI-42 of the at least one previously drilled hole 42 and the second location information 2LOI-42 of the at least one previously drilled hole 42. Based on the determined deviation DEV, the control system 10 of the underground mining machine 1 according to the present invention is configured to determine the position information POI1-42 of the underground mining machine 1 having entered the drill site 40 relative to the at least one previously drilled hole 42.

An advantage of the solution of the present application is that based on the first location information 1LOI-42 and based on the second location information 2LOI-42 of the at least one previously drilled hole 42 at the drill site 40 the position information POI1-42 of the underground mining machine 1 that has entered the drill site 40 can be accurately determined in relation to the at least one previously drilled hole 42 at the drill site 40. In response to that the control system 10 of the underground mining machine 1 that has entered the drill site 40 recognizes the at least one previously drilled hole 42 relative to the underground mining machine 1 at the same location at the drill site 40 as did the control system of the underground mining machine that drilled the at least one previously drilled hole 42. This improves the accuracy of the work to be continued at the drill site 40, because the work tasks to be implemented at the drill site 40 will be implemented at correct locations with respect to the previously drilled holes 42 even if the previously drilled holes 42 would not be exactly at locations as specified in a drill plan designed for the drill site 40.

According to an example of the underground mining machine 1, the control system 10 of the underground mining machine 1 is configured to
receive navigation data from at least one navigation device 50 external to the underground mining machine 1 in response to the underground mining machine 1 entering the drill site 40,
determine location information LOI1-42 of the at least one previously drilled hole 42 relative to the underground mining machine 1 having entered the drill site 40, and
determine the second location information 2LOI-42 of the at least one previously drilled hole 42 at the drill site 40 with respect to the underground mining machine 1 having entered the drill site 40 based on the received navigation data and based on the determined location information LOI1-42 of the at least one previously drilled hole 42 relative to the underground mining machine 1 having entered the drill site 40.

An example of the underground mining machine 1 like that is shown schematically referring to Figures 5 and 6, wherein Figure 6 shows schematically an example of using the control system 10 of the underground mining machine 1 to determine position information POI1-42 of the underground mining machine 1 relative to the previously drilled hole 42.

The control system 10 of the underground mining machine 1 is connected to the navigation device 50 with a communication interface CI50. The control system 10 of the underground mining machine 1 is configured to receive from the navigation device 50 navigation data regarding position and orientation of the underground mining machine 1 in response to the underground mining machine 1 entering the drill site 40. Based on the received navigation data the control system 10 of the underground mining machine 1 is configured to determine position information POI1-40 of the underground mining machine 1 at the drill site 40. The control system 10 of the underground mining machine 1 is configured to determine position information POI1-40 of the underground mining machine 1 at the drill site 40 either when the underground mining machine 1 is still moving at the drill site 40 or in response to the stoppage of the underground mining machine 1 at the drill site 40. The navigation device 50 may for example be a total station or some other applicable device capable to provide information regarding position and orientation of the underground mining machine 1 at the drill site 40.

The position information POI1-40 of the underground mining machine 1 at the drill site 40 comprises position and orientation of the underground mining machine 1 at the drill site 40 in the operating environment coordinate system OECS of the underground mining machine 1. Because an origin of the operating environment coordinate system OECS is at a specific point in the operating environment of the underground mining machine 1, and because an origin of the machine coordinate system MCS of the underground mining machine 1 is at a specific point in the underground mining machine 1, the dependence between the operating environment coordinate system OECS and the machine coordinate system MCS is therefore known.

Still referring to Figures 5 and 6, the control system 10 of the underground mining machine 1 is configured to determine, in the machine coordinate system MCS, location information LOI1-42 of the previously drilled hole 42 relative to the underground mining machine 1 having entered the drill site 40. The control system 10 of the underground mining machine 1 is configured to determine the location information LOI1-42 of the previously drilled hole 42 relative to the underground mining machine 1 having entered the drill site 40 based on information received from the at least one of the sensor system 7 or the at least one imaging device 8 in response to the underground mining machine 1 having entered the drill site 40. The determination of the location information LOI1-42 of the at least one previously drilled hole 42 relative to the underground mining machine 1 is discussed in more detail below.

Because the dependence between the operating environment coordinate system OECS and the machine coordinate system MCS is known, the control system 10 of the underground mining machine 1 can determine the second location information 2LOI-42 of the at least one previously drilled hole 42 with respect to the underground mining machine 1 having entered the drill site 40 based on the determined position information POI1-40 of the underground mining machine 1 at the drill site 40 and based on the determined location information LOI1-42 of the previously drilled hole 42 relative to the underground mining machine 1 having entered the drill site 40.

Based on the first location information 1LOI-42 of the previously drilled hole 42 and based on the second location information 2LOI-42 of the previously drilled hole 42 the control system 10 of the underground mining machine 1 is configured the determine the deviation DEV between the first location information 1LOI-42 and the second location information 2LOI-42. Based on the determined deviation DEV the control system 10 of the underground mining machine 1 is configured the determine the position information POI1-42 of the underground mining machine 1 having entered to the drill site 40 relative to the previously drilled hole 42 at the drill site 40.

Regarding to the determination of the location information LOI1-42 of the at least one previously drilled hole 42 relative to the underground mining machine 1 having entered the drill site 40, according to an example of the control system 10 of the underground mining machine 1 the control system 10 is configured to
receive from the at least one imaging device 8 imaging data representing surroundings of the underground mining machine 1 at the drill site 40 in response to the underground mining machine 1 entering the drill site 40,
analyse the imaging data for detecting at least one previously drilled hole 42 at the drill site 40,
identify the at least one detected previously drilled hole 42, and
determine the location information LOI1-42 of the at least one identified previously drilled hole 42 relative to the underground mining machine 1 having entered the drill site 40.

According to this example of the control system 10 of the underground mining machine 1, the control system 10 is configured to detect and identify at least one previously drilled hole 42 in the imaging data describing the surroundings of the underground mining machine 1 having entered the drill site 40, and to determine location information LOI1-42 of the at least one identified previously drilled hole 42 relative to the underground mining machine 1 having entered the drill site 40.

According to an example of the control system 10 of the underground mining machine 1 like that, the control system 10 is configured to analyse the imaging data for detecting a pattern of previously drilled holes 42 at the drill site 40. The control system 10 is further configured to compare the detected pattern of the previously drilled holes 42 to the first location information 1LOI-42 of the previously drilled holes 42 to identify the at least one detected previously drilled hole 42 in a group of the detected previously drilled holes 42. According to this example of the control system 10, the identification of the at least one previously drilled hole 42 is based on analysis of the imaging data and the first location information 1LOI-42 of the previously drilled holes 42.

According to an example of the control system of the underground mining machine, the control system is configured to receive information by an external control action to identify the at least one detected previously drilled hole. According to this example of the control system 10, the identification of the at least one detected previously drilled hole 42 is based on input received from an operator of the underground mining machine 1, wherein the input specifies the at least one detected previously drilled hole 42 among a group of the detected previously drilled holes 42.

Regarding determination of the location information LOI1-42 of the at least one identified previously drilled hole 42 relative to the underground mining machine 1 having entered the drill site 40, according to an example of the control system 10 of the underground mining machine 1, the control system 10 is configured to
determine location information LOI8-42 of the at least one identified previously drilled hole 42 relative to the at least imaging device 8,
determine position information POI8 of the at least one imaging device 8 relative to the movable carrier 2, and
determine the location information LOI1- 42 of the at least one identified previously drilled hole 42 relative to the underground mining machine 1 having entered the drill site 40 based on the determined location information LOI8-42 of the at least one identified previously drilled hole 42 relative to the at least one imaging device 8 and based on the determined position information POI8 of the at least one imaging device 8 relative to the movable carrier 2.

In this example of the control system 10, the control system 10 is configured to determine the location information of the at least one identified previously drilled hole 42 relative to the at least imaging device 8. This determination is based on an analysis of the imaging data received from the at least one imaging device 8.

In this example of the control system 10, the control system 10 is further configured to determine position information POI8 of the at least one imaging device 8 relative to the movable carrier 2. The position information POI8 of the imaging device 8 relative to the movable carrier 2 comprises position and orientation of the imaging device 8 relative to the movable carrier 2.

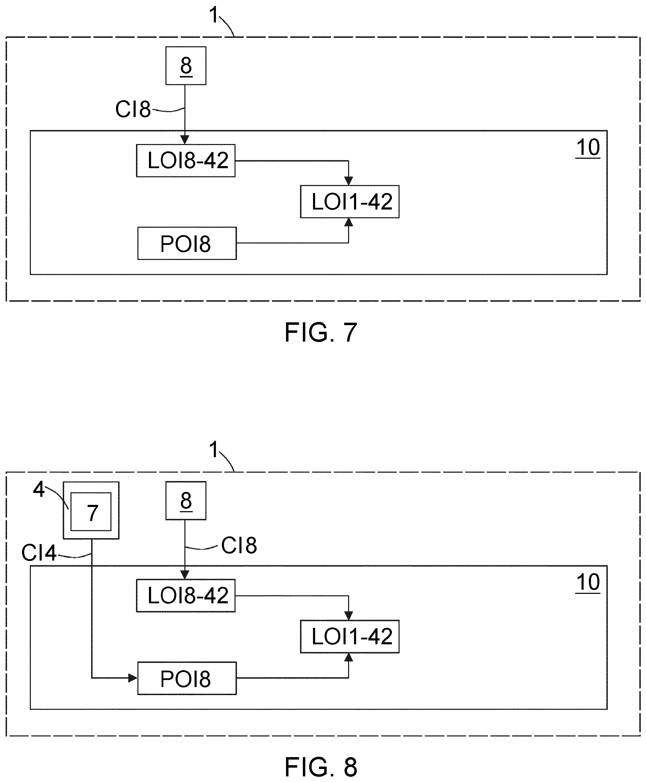

If the at least one imaging device 8 is arranged in the movable carrier 2, the position and orientation of the at least one imaging device relative to the movable carrier 2 is known in the machine coordinate system MCS, as discussed above. An example of a detail of the control system 10 like that is shown schematically in Figure 7.

If the at least one imaging device 8 is arranged in the boom 4, the sensor system 7 is configured to provide information describing position and orientation of the imaging device 8 relative to the movable carrier 2 in the machine coordinate system MCS, as also discussed above. An example of a detail of the control system 10 like that is shown schematically in Figure 8.

It will be obvious to a person skilled in the art that, as the technology advances, the inventive concept can be implemented in various ways. The present application and its examples are not limited to the examples described above but may vary within the scope of the claims.

## Claims

1. An underground mining machine (1) comprising a movable carrier (2),
at least one imaging device (8) for imaging an operating environment of the underground mining machine (1), and
a control system (10) for controlling an operation of the underground mining machine (1), wherein the control system (10) is configured to
access at least one database (30), wherein the at least one database (30) comprises a first location information (1LOI-42) of at least one previously drilled hole (42) at a drill site (40) in the operating environment of the underground mining machine (1),
determine a second location information (2LOI-42) of the at least one previously drilled hole (42) at the drill site (40) with respect to the underground mining machine (1) entering the same drill site (40), and
determine position information (POI1-42) of the underground mining machine (1) having entered the drill site (40) relative to the at least one previously drilled hole (42) based on the first location information (1LOI-42) of the at least one previously drilled hole (42) and based on the second location information (2LOI-42) of the at least one previously drilled hole (42).

2. An underground mining machine as claimed in claim 1, wherein the control system (10) is configured to
determine deviation (DEV) between the first location information (1LOI-42) of the at least one previously drilled hole (42) and the second location information (2LOI-42) of the at least one previously drilled hole (42), and
determine the position information (POI1-42) of the underground mining machine (1) having entered the drill site (40) relative to the at least one previously drilled hole (42) based on the determined deviation (DEV).

3. An underground mining machine as claimed in claim 1 or 2, wherein the control system (10) is configured to
receive navigation data from at least one navigation device (50) external to the underground mining machine (1) in response to the underground mining machine (1) entering the drill site (40),
determine location information (LOI1-42) of the at least one previously drilled hole (42) relative to the underground mining machine (1) having entered the drill site (40), and
determine the second location information (1LOI-42) of the at least one previously drilled hole (42) at the drill site (40) with respect to the underground mining machine (1) having entered the drill site (40) based on the received navigation data and based on the determined location information (LOI1-42) of the at least one previously drilled hole (42) relative to the underground mining machine (1) having entered the drill site (40).

4. An underground mining machine as claimed in claim 3, wherein the control system (10) is configured to
receive from the at least one imaging device (8) imaging data representing surroundings of the underground mining machine (1) at the drill site (40) in response to the underground mining machine (40) entering the drill site (40),
analyse the imaging data for detecting at least one previously drilled hole (42) at the drill site (40),
identify the at least one detected previously drilled hole (42), determine location information (LOI1-42) of the at least one identified previously drilled hole (42) relative to the underground mining machine (1) having entered the drill site (40), and
determine the second location information (2LOI-42) of the at least one identified previously drilled hole (42) at the drill site (40) with respect to the underground mining machine (1) having entered the drill site (40) based on the received navigation data and based on the determined location information of the at least one identified previously drilled hole (42) relative to the underground mining machine (1) having entered the drill site (42).

5. An underground mining machine as claimed in any one of the preceding claims, wherein the control system (10) is configured to control the operation of the underground mining machine (1) based on the determined position information (POI1-42) of the underground mining machine (1) relative to the at least one previously drilled hole (42).

6. An underground mining machine as claimed in claim 4 or 5, wherein the control system (10) is configured to
determine location information (LOI8-42) of the at least one identified previously drilled hole (42) relative to the at least imaging device (8),
determine position information (POI8) of the at least one imaging device (8) relative to the movable carrier (2), and
determine the location information (LOI1-42) of the at least one identified previously drilled hole (42) relative to the underground mining machine (1) having entered the drill site (40) based on the determined location information (LOI8-42) of the at least one identified previously drilled hole (42) relative to the at least one imaging device (8) and based on the determined position information (POI8) of the at least one imaging device (8) relative to the movable carrier (2).

7. An underground mining machine as claimed in claim 6, wherein the control system (10) is configured to analyse the imaging data received from the at least one imaging device (8) for determining the location information (LOI8-42) of the at least one identified previously drilled hole (42) relative to the at least imaging device (8).

8. An underground mining machine as claimed in any one of the preceding claims, wherein the at least one imaging device (8) is arranged at a determined position and orientation in the movable carrier (2) of the underground mining machine (1).

9. An underground mining machine as claimed in any one of preceding claims 1 to 7, wherein the underground mining machine (1) comprises a boom (4) attached to the movable carrier (2), at least one imaging device (8) arranged in the boom (8) at a determined position and orientation in the boom (4) and at least one sensing arrangement configured to provide information describing position information of the boom (4) relative to the movable carrier (2), and wherein the control system (10) is configured to determine position information (POI8) of the at least one imaging device (8) relative to the movable carrier (2) based on the position information of the boom (4) relative to the movable carrier (2) and the determined position and orientation of the at least one imaging device (8) in the boom (4).

10. An underground mining machine as claimed in any of the preceding claims wherein the control system (10) is configured to
analyse the imaging data for detecting a pattern of previously drilled holes (42) at the drill site (40), and
compare the detected pattern of the previously drilled holes (42) to the first location information (1LOI-42) of the previously drilled holes (42) to identify the at least one detected previously drilled hole (42).

11. An underground mining machine as claimed in any of the preceding claims wherein the control system (10) comprises a user interface (20) configured to receive information by an external control action to identify the at least one detected previously drilled hole (42).

12. An underground mining machine as claimed in any of the preceding claims, wherein the at least one imaging device (8) comprises at least one of the following: a camera, a stereo camera, a LiDAR, a radar or a time-of flight camera.

13. An underground mining machine as claimed in any one of the preceding claims, wherein the underground mining machine (1) is one of an underground drilling rig, underground bolting machine or underground charging machine.

14. A method for determining position information of an underground mining machine as claimed in claim 1, the method comprising
accessing, by means of the control system (10), at least one database (30), wherein the at least one database (30) comprises a first location information (1LOI-42) of at least one previously drilled hole (42) at a drill site (40) in the operating environment of the underground mining machine (1),
determining, by means of the control system (10), a second location information (2LOI-42) of the at least one previously drilled hole (42) at the drill site (40) with respect to the underground mining machine (1) entering the same drill site (40), and
determining, by means of the control system (10), position information (POI1-42) of the underground mining machine (1) having entered the drill site (40) relative to the at least one previously drilled hole (42) based on the first location information (1LOI-42) of the at least one previously drilled hole (42) and based on the second location information (2LOI-42) of the at least one previously drilled hole (42).

15. A computer program comprising instructions for causing the control system (10) of the underground mining machine (1) of claim 1 to perform at least the following:
accessing at least one database (30), wherein the at least one database (30) comprises a first location information (1LOI-42) of at least one previously drilled hole (42) at a drill site (40) in the operating environment of the underground mining machine (1),
determining a second location information (2LOI-42) of the least one previously drilled hole (42) at the drill site (40) with respect to the underground mining machine (1) entering the same drill site (40), and
determining position information (POI1-42) of the underground mining machine (1) having entered the drill site (40) relative to the at least one previously drilled hole (42) based on the first location information (1LOI-42) of the at least one previously drilled hole (40) and based on the second location information (2LOI-42) of the at least one previously drilled hole (42).
